# EUROPÄISCHE PATENTSCHRIFT

(11) **EP 0 463 340 B1**
(45) Veröffentlichungstag und Bekanntmachung des Hinweises auf die Patenterteilung: **18.01.1995**
(21) Anmeldenummer: 91107685.9
(22) Anmeldetag: 11.05.1991
(51) Int. Cl.: B62J 7/04

(54) **Verstellbarer Gepäckträger für Zweiradfahrzeuge**
Adjustable luggage carrier for two-wheeled vehicles
Porte-bagages réglable pour véhicules à deux roues

(30) Priorität: 28.06.1990 DE 4020563
(43) Veröffentlichungstag der Anmeldung: 02.01.1992
(73) Patentinhaber: ESGE-Marby GmbH + Co. KG., D-33729 Bielefeld (DE)
(72) Erfinder: Belka, Heinrich, D-4817 Leopoldshöhe (DE)
(74) Vertreter: Rüger, Rudolf, Dr.-Ing.

(56) Entgegenhaltungen:
- EP-A- 0 229 973
- CH-A- 309 083
- DE-A- 3 343 844
- DE-A- 3 817 396
- FR-A- 2 122 219
- FR-A- 2 353 430
- US-A- 4 350 361

## Beschreibung

Die Erfindung geht aus von einem Gepäckträger mit den Merkmalen des Oberbegriffs des Anspruches 1.

Aus der DE-C-33 43 844 ist ein gattungsgemäßer Gepäckträger bekannt, der auf beiden Seiten ein Paar von Stützschenkeln aufweist, die nach unten zu V-förmig konvergieren. Die beiden vorderen Stützschenkel sind genauso wie die beiden hinteren Stützschenkel jeweils von einem U-förmigen Drahtbügel gebildet, der in werksseitig an dem Gepäckträger angebrachten Formspritzteilen sitzt. In diesen Formspritzteilen sind die Drahtbügel verschwenkbar und können für Transport- und Verpackungszwecke an den Rahmen des Gepäckträgers angeklappt werden.

Weil die einander zugeordneten Stützschenkel einer jeden Seite starr miteinander verbunden sind, können sie nicht aus den Formspritzteilen herausrutschen. Darüber hinaus ergibt sich eine ausreichende Seitensteifigkeit des Gepäckträgers, obwohl die Formspritzteile nur geringe Querkräfte aufnehmen können.

Da einerseits aus Stabilitätsgründen eine feste und unverschiebliche Verbindung zwischen den Stützschenkeln und dem Gepäckträgerrahmen vorgesehen ist und die Stützschenkel andererseits aus Gründen der Platzersparnis beim Transport an den Gepäckträgerrahmen klappbar sind, sind die konstruktiven Anforderungen an die Formspritzteile hoch so daß das Werkzeug für die Formspritzteile kompliziert und die Fertigung kostenintensiv ist.

Bei diesem bekannten Fahrradgepäckträger beschränkt sich die Verstellbarkeit bestimmungsgemäß auf eine Höhenverstellung der Stützschenkel in einem Klemmteil, das an dem Ausfallende des Hintergabelrohrs zu befestigen ist.

Wenn die von den Schenkeln des Drahtbügels gebildeten Stützschenkel bspw. beim Transport oder beim Auspacken gegeneinander verbogen werden, muß beim Befestigen der Klemmteile an dem jeweiligen Ausfallende des Rahmens die von dem Drahtbügel aufgebrachte Vorspannung überwunden werden. Diese Vorspannung erschwert nicht nur die Montage der Klemmteile, sie führt auch dazu, daß die unteren Enden der Stützschenkel in dem jeweiligen Klemmteil verkanten, wodurch auch die Höheneinstellung erschwert wird.

Desweiteren ist aus der DE-A-38 17 396 ein Gepäckträger bekannt, bei dem die oberen Enden der Stützschenkel längsverschieblich in Führungsnuten sitzen, die an dem Gepäckträgerrahmen angebracht sind. Bei dem bekannten Gepäckträger sind die Stützschenkel nicht gegenüber dem Gepäckträgerrahmen verschwenkbar. Die unteren Enden der Stützschenkel sitzen höhenverstellbar in einem Klemmteil, das an dem Fahrradrahmen zu befestigen ist.

Die Schenkel sind damit unabhängig sowohl in der Höhe als auch längs des Rahmens verstellbar, so daß der bekannte Gepäckträger an unterschiedliche Fahrzeugrahmen montiert werden kann.

Der bekannte Gepäckträger ist wegen der erforderlichen Länge der Führungsnuten schwer. Bei gelockerten Schrauben sind die Stützschenkel darüber hinaus in den Führungsnuten nur in Richtung quer zu den Nuten gehalten. Dadurch kann eine unerwünschte Neigung der Gepäckauflagefläche eintreten.

Schließlich zeigt die US-A-4 350 361 einen Gepäckträger, bei dem die an seinen beiden Längsseiten nach unten verlaufenden Stützschenkel drehbar mit Querstreben des Gepäckträgerrahmens verbunden sind. Von der Drehbarkeit wird allerdings deswegen kein Gebrauch gemacht, weil am unteren Ende aller Stützschenkel eine Manschette sitzt, die entsprechend der Anzahl der Stützschenkel zueinander parallele Bohrungen enthält und eine beträchtliche Längserstreckung in Richtung der Stützschenkel aufweist. Dadurch werden zwangsläufig die Stützschenkel in der konstruktiv bedingten Winkellage zueinander bzw. zu der Gepäckauflagefläche fixiert, selbst dann, wenn die Manschette noch nicht, wie vorgesehen, werkseitig durch Verquetschen oder Verstemmen unbeweglich mit den Stützschenkeln verbunden ist. Bei dem bekannten Fahrradgepäckträger ist deswegen auch zur Anpassung an unterschiedliche Rahmengeometrien eine verstellbare Lasche vorhanden, die im Bereich des Sattelrohres am Fahrradrahmen befestigt ist und mittels eines Langloches und einer Befestigungsschrauben verstellbar an dem Fahrradgepäckträgerrahmen angebracht ist.

Ausgehend hiervon liegt die Erfindung der Aufgabe zugrunde, einen einfach zurfertigenden Gepäckträger für ein Zweiradfahrzeug zurschaffen, der leicht und vielfältig an unterschiedliche Geometrien anpaßbar ist und einen sicheren Sitz gewährleistet.

Diese Aufgabe wird erfindungsgemäß durch einen Gepäckträger mit den Merkmalen des Anspruchs 1 gelöst.

Weil die Stützschenkel unabhängig voneinander höhenverstellbar und verschwenkbar sind, können bei der Handhabung keine Verspannungen zwischen Stützschenkeln verschiedener Seiten des Gepäckträgers auftreten. Die Stützschenkel lassen sich daher einfach und nacheinander mit ihrem jeweiligen Klemmteil an einem Ende einer Gabel des Zweiradfahrzeuges befestigen. Der neue Gepäckträger ist dabei einfach an Zweiradfahrzeugen anzubringen, die sowohl hinsichtlich der Höhe als auch hinsichtlich der Längsrichtung unterschiedliche Abstände zwischen dem oberen Rahmensteg - und dem entsprechenden Gabelende aufweisen.

Weil jeder Stüztschenkel von einem eigenen festklemmbaren Gelenk gehalten ist, weist der neue Gepäckträger eine große Seitenstabilität auf, die noch vergrößert wird, wenn auf jeder Seite des Gepäckträgers zwei Stützschenkel vorgesehen sind.

Wenn die oberen Enden der Stützschenkel in an dem Gepäckträgerrahmen vorgesehenen nach unten offenen Nuten sitzen, liegt der Gepäckträger mit dem Grund der Nuten auf den oberen Enden der Stützschenkel auf, so daß auch bei nicht festgeklemmten Gelenken ein sicherer Sitz des Gepäckträgers gewährleistet ist. Das formschlüssige Festklemmen des Gelenkes gestaltet sich dabei besonders einfach, wenn das jeweilige obere Ende des Stützschenkels über eine Anlagefläche einer Klemmschraube gegen den Nutengrund verspannt wird.

Wenn sich die Klemmschraube dabei einenends in einer Gewindebohrung und anderenends über eine Hülse in einer Bohrung in der der Gewindebohrung gegenüberliegenden Seitenwand der Nut abstützt, sind die über die Kegelfläche der Hülse auf das obere Ende des Stützschenkels ausgeübten Kräfte besonders groß, wodurch ein sicherer Halt des jeweiligen Stützschenkels in dem Gelenk gewährleistet ist.

Stützschenkel, die über ihre ganze Länge zylindrisch sind, haben eine besonders große Stabilität, weil keine Schwachstellen durch etwaige Abflachungen hervorgerufen werden. Ist das obere Ende des Stützschenkels in der Art eines Hakens abgebogen, sind die Stützschenkel leicht zu fertigen und einfach in dem Gelenk zu befestigen, wo sie unverlierbar gehalten sind.

Wenn auf jeder Seite des Gepäckträgers zwei Stützschenkel vorgesehen sind, die in den jeweiligen Aufnahmebohrungen des Klemmteiles kippbar sind, werden Abweichungen in der Ausrichtung der unteren Enden der Stützschenkel zueinander auf einfache Weise ausgeglichen.

Dadurch, daß die Gelenke in Querstreben des Gepäckträgers sitzen, die aus Strangpreßprofil abgelängt werden, ergibt sich insgesamt eine einfache Fertigung und eine hohe Seitenstabilität des Gepäckträgers.

In der Zeichnung ist ein Ausführungsbeispiel des Gegenstandes der Erfindung dargestellt. Es zeigen:
Fig. 1 den Hinterbau des Fahrrades mit einem daran befestigten Gepäckträger gemäß der Erfindung, in einer perspektivischen Darstellung,
Fig. 2 die Befestigung eines der Stützschenkel an dem Rahmen des Gepäckträgers nach Fig. 1, in einer vergrößerten perspektivischen Explosionsdarstellung,
Fig. 3 den Gepäckträger nach Fig. 1, in einer Seitenansicht, mit gestrichelt angedeuteten Stützschenkeln in einer zweiten Stellung, und
Fig. 4 das Klemmteil für den Gepäckträger nach Fig. 3, in einer vergrößerten Explosionsdarstellung in der Draufsicht.

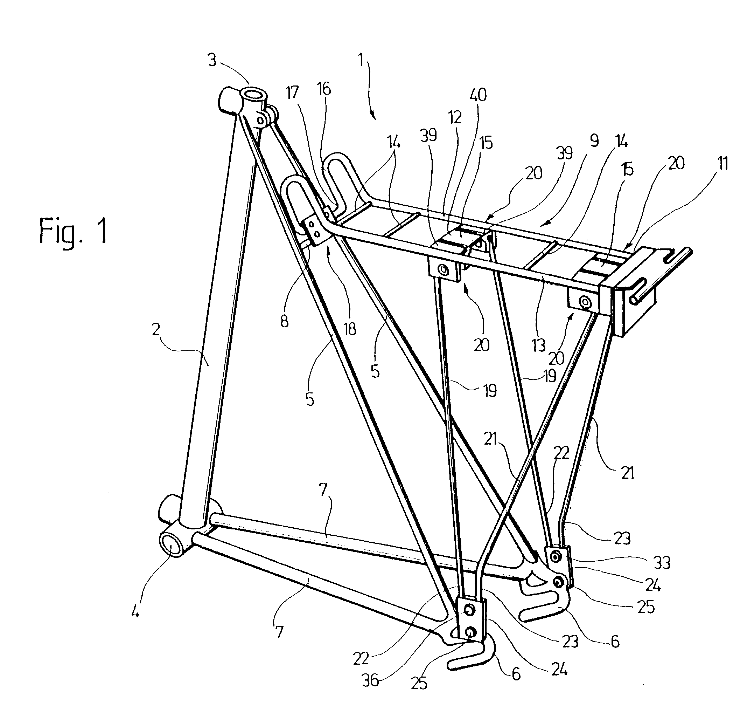

In Fig. 1 ist ein Hinterbau 1 eines Fahrrades mit seinem Sattelrohr 2 dargestellt, das einen Sattelkopf 3 sowie ein Tretlagergehäuse 4 aufweist. Von dem Sattelkopf 3 gehen zwei Hintergabelstreben 5 schräg nach unten. An ihren freien unteren Enden tragen beide Hintergabelstreben 5 Ausfallenden 6, die über zwei etwa horizontal verlaufende Hintergabelrohre 7 mit den Tretlagergehäuse 4 verbunden sind.

Knapp unterhalb des Sattelkopfes 3 ist an beide Hintergabelstreben 5 eine geeigneter Steg 8 angeschweißt.

An dem so gestalteten Fahrradhinterbau 1 ist ein Gepäckträger 9 mit einem eine Gepäckauflagefläche definierenden, etwa rechteckigen Rahmen 11 befestigt. Der etwa rechteckige Rahmen 11 weist zwei gerade, im wesentlichen zylindrische Längsstreben 12 und 13 auf, die mit Abstand parallel zueinander und parallel zu der Längserstreckung des Fahrrades verlaufen. Quer zwischen den Längsstreben 12 und 13 erstrecken sich dünne zylindrische Streben 14 sowie zwei noch näher zu beschreibende Querstreben 15, die mit Abstand voneinander bspw. durch Schweißnähte an den Längsstreben 12, 13 befestigt sind. An ihrem dem Sattelrohr 2 zugekehrten Ende 16 sind die Längsstreben 12 und 13 U-förmig abgebogen und über eine parallel zu den Streben 14 verlaufende weitere Strebe 17 einstückig miteinander verbunden. Die weitere Strebe 17 ist mittels einer an sich bekannten Befestigungsvorrichtung 18 an die Strebe 8 angeschraubt.

Die weitere Abstützung des Rahmens 11 geschieht mittels zweier Paare von Stützschenkeln 19, 21, die schwenkbar in Gelenken 20 gelagert sind, von denen in jeder Querstrebe 15 zwei vorgesehen sind. Die Gelenke 20 sitzen im Bereich der Längsstreben 12 bzw. 13 außen an den Querstreben 15.

Auf jeder Seite des Rahmens befindet sich ein Paar von Stützschenkeln 19, 21, die in Richtung auf das entsprechende Ausfallende 6 zu nach unten V-förmig konvergieren. Die beiden aus zylindrischem Rohr- oder Drahtmaterial bestehenden, über ihre gesamte Länge Kreisquerschnitt aufweisenden Stützschenkel 19, 21 eines jedes Paares stecken mit ihren unteren freien Enden 22, 23 höhenverstellbar in einem Klemmteil 24, das mittels einer Schraube 25 an dem betreffenden Ausfallende 6 angeschraubt ist. Das untere Ende 23 des hinteren Stützschenkels 21 ist derart abgebogen, daß die unteren Enden 22, 23 der beiden Stützschenkel 19, 21 eines jeden Paares in kleinen Abstand nebeneinander und im wesentlichen parallel zueinander verlaufen.

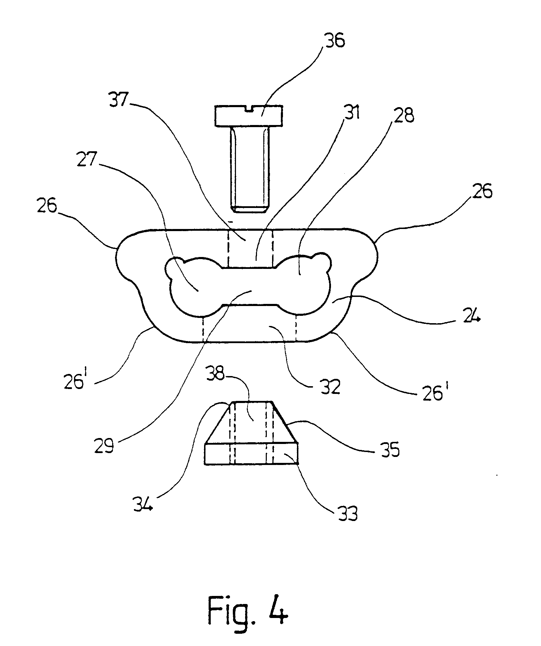

Das in Fig. 4 in der Draufsicht gezeigte Klemmteil 24 ist im Querschnitt im wesentlichen rechteckig und weist abgerundete Ecken 26 und 26' auf. Zur Aufnahme der unteren Enden 22, 23 der Stützschenkel 19, 21 sind in dem Klemmteil 24 zwei zueinander parallele Aufnahmebohrungen 27 und 28 vorgesehen, die das Klemmteil 24 in Längsrichtung vollständig durchsetzen. Die Aufnahmebohrungen 27 und 28 sind mittels eines ebenfalls über die ganze Länge des Klemmteiles 24 verlaufenden Durchbruchs 29 so miteinander verbunden, daß die Aufnahmebohrungen 27, 28 und der Durchbruch 29 eine etwa hantelförmige Querschnittsgestalt aufweisen.

Zwischen den Aufnahmebohrungen 27 und 28 verläuft im Bereich des Durchbruches 29 eine abgestufte Durchgangsbohrung 31, in deren den größeren Durchmesser aufweisenden Abschnitt 32 ein Klemmkeil oder -konus 33 mit seinem verjüngten Ende 34 voraus eingesetzt ist. Der Klemmkeil 33 liegt mit seiner Keil- bzw. Konusfläche 35 an dem Umfang der in Fig. 4 nicht gezeigten unteren Enden 22, 23 der Stützschenkel 19, 21 an und ist gegen diese mittels einer Klemmschraube 36 verspannbar, die von außen durch den den kleineren Durchmesser aufweisenden Abschnitt 37 der abgestuften Durchgangsbohrung 31 hindurch in eine Gewindebohrung 38 in dem Klemmkeil 33 eingeschraubt ist.

Der Innendurchmesser der Aufnahmebohrungen 27, 28 ist geringfügig ca. 0,5 mm größer als der Außendurchmesser der zugeordneten unteren Enden 22, 23 der Stützschenkel 19, 21, die daher in den Aufnahmebohrungen 27, 28 begrenzt kippbar sind. Dadurch können kleine Abweichungen in der Parallelität der beiden unteren Enden 22 und 23 eines jeden Stützschenkelpaares zueinander ausgeglichen werden.

Die unteren Enden 22, 23 und der Klemmkeil 33 können aus Material unterschiedlicher Härte hergestellt oder gerändelt sein, um ein Mitdrehen des kreiskegelförmigen Klemmkeiles 33 bei der Montage zu vermeiden. Die Klemmteile 24 sind bspw. durch Ablängen aus einem Strangpreßprofil hergestellt.

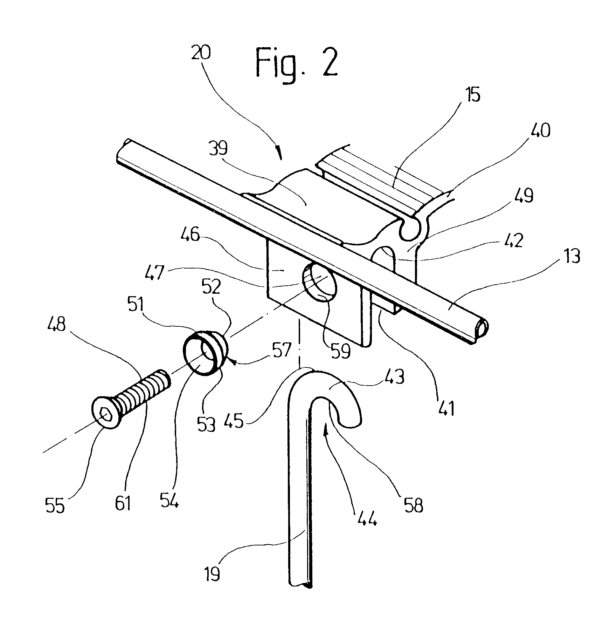

In Fig. 2 ist in einer vergrößerten Explosionsdarstellung und im Ausschnitt die vordere Querstrebe 15 mit einem ihrer Gelenke 20 gezeigt, in dem der vordere Stützschenkel 19 mit seinem oberen Ende schwenkbar gelagert ist. Alle vier Gelenke 20 des Gepäckträgers 9 sind untereinander gleich und die beiden Gelenke 20 einer jeden der zwei Querstreben 15 zueinander spiegelbildlich. Deshalb sind alle Gelenke 20 mit dem selben Bezugszeichen versehen. Die nachstehende Beschreibung gilt für alle vier Gelenke 20.

Die Querstrebe 15 trägt an ihren beiden mit den Längsstreben 12 bzw.13 verbundenen Enden 39 je eine nach unten und an den Enden offene parallelflankige Nut 41, die mit ihrer Längsrichtung parallel zu der Längsstrebe 13 verläuft. Zwischen den beiden Enden 39 der Querstrebe 15 erstreckt sich ein Steg 40 geringer Dicke, der in Längsrichtung die gleichen Abmaße aufweist wie die Nut 41. Die Querstreben 15 sind durch Ablängen aus einem Strangpreßprofil hergestellt und verleihen dem Gepäckträger eine hohe Verwindungssteifigkeit.

Die parallelflankige Nut 41 hat einen Nutengrund 42, der im Querschnitt die Form eines Halbkreisbogens aufweist. Der Radius des Halbkreisbogens ist geringfügig größer als der halbe Durchmesser des über seine ganze Länge im Querschnitt kreisförmigen Stützschenkels 19. Der Stützschenkel 19 ist an seinem oberen Ende U-förmig nach der Art eines Hakens 43 um ca. 180 Grad umgebogen, derart, daß in der Seitenansicht von dem Haken 43 eine halbkreisförmige Öffnung 44 begrenzt wird. Der Haken 43 befindet sich im montierten Zustand im Inneren der Nut 41, wobei sich der Gepäckträger 9 über den Nutengrund 42 auf der gebogenen Außenfläche 45 des Hakens 43 abstützt. Die Abmaße der Nut 41 sind so gewählt, daß der Haken 43 vollständig in der Nut 41 verschwindet.

Eine der Längsstrebe 13 zugekehrte Seitenwand 46 der Nut 41 weist eine rechtwinklig zu der Längsrichtung der Nut 41 verlaufende Bohrung 47 auf, durch die hindurch eine Klemmschraube 48 in eine nicht näher gezeigte Gewindebohrung in der zweiten Seitenwand 49 der Nut 41 einschraubbar ist. Auf der Klemmschraube 48 sitzt eine Hülse 51, die mit ihrem vorderen konisch verjüngten Ende 52 zuvorderst in der Bohrung 47 steckt. Die Hülse 51 weist einen von ihrem vorderen Ende 52 abgelegenen zylindrischen Fortsatz 53 auf, mit dem sie sich im montierten Zustand in der Bohrung 47 abstützt. In dem zylindrischen Fortsatz 53 ist eine Ansenkung 54 für den Kopf 55 der als Senkkopfschraube ausgebildeten Klemmschraube 48 vorgesehen. Die Hülse 51 kann auch mit dem Kopf 55 der Klemmschraube 48 einstückig sein.

Im montierten Zustand sitzt die Hülse 51 mit ihrem vorderen Ende 52 in der Öffnung 44 des Hakens 43 und ist mit ihrer Kegelfläche 57 in Anlage mit der von der gebogenen Außenfläche 45 abgelegenen gebogenen Innenfläche 58 des Hakens 43. Beim Anziehen der Klemmschraube 48 verspannt die Hülse 51 über ihre Kegelfläche 57 den Haken 43 gegen den Nutengrund 42. Die dabei auftretenden Querkräfte werden von dem Kopf 55 der Klemmschraube 48 über die Ansenkung 54 in den zylindrischen Fortsatz 53 und von diesem in die Wandung 59 der Bohrung 47 geleitet.

Die Öffnung 44 des Hakens 43 ist geringfügig größer als der Außendurchmesser des zylindrischen Fortsatzes 53 der Hülse 51, so daß die Hülse 51 den Haken 43 beim Anziehen der Klemmschraube 48 nicht aufweitet. Der größte Abstand zwischen dem Nutengrund 42 und der Achse der Bohrung 47 ist kleiner als die Summe aus dem Radius der Bohrung 47 und dem Durchmesser der zylindrischen Strebe 19 im Bereich des Hakens 43. Dadurch erhält der montierte aber noch nicht festgeklemmte Stützschenkel 19, der mit seinem Haken 43 unverlierbar auf der von der Klemmschraube 48 gehaltenen Hülse 51 hängt, etwas Spiel in Längsrichtung der Nut 41. Gleichzeitig ist jedoch gewährleistet, daß die Hülse 51 beim Anziehen der Klemmschraube 48 mit ihrer Kegelfläche 57 mit der gebogenen Innenfläche 58 des Hakens 43 in Anlage gelangt und dadurch den Stützschenkel 19 in der Nut 41 festklemmt.

Zur Montage des Stützschenkels 19 an dem Gepäckträger 9 wird zunächst die Hülse 51 mit ihrem zylindrischen Fortsatz 53 zuvorderst über den Gewindeschaft 61 der Klemmschraube 48 geschoben und der Stützschenkel 19 mit seinem Haken 43 so von unten in die Nut 41 gesteckt, daß die Klemmschraube 48 durch die Bohrung 47 und die Öffnung 44 des Hakens 43 hindurch unterhalb der gebogenen Innenfläche 58 in die Gewindebohrung in der Seitenwand 49 zu schrauben ist. Die Ansenkung 54 der Hülse 51 nimmt beim Anziehen der Klemmschraube 48 deren Kopf 55 auf und stützt ihn ab. Der Stützschenkel 19 ist jetzt unverlierbar aber noch schwenkbar in dem von der Nut 41, der Klemmschraube 48 und der Hülse 51 gebildeten Gelenk 20 gelagert. Solange die Klemmschraube 48 in der Gewindebohrung sitzt, kann der Haken 43 nicht aus der Nut 41 herausgelangen, was die Montage des Gepäckträgers an dem Hinterbau 1 sehr vereinfacht.

Wenn beide Stützschenkel 19 und 21 einer Seite derart an dem Gepäckträger 9 vormontiert sind, werden ihre unteren Enden 22 bzw. 23 in die Aufnahmebohrungen 28 bzw. 27 des zugeordneten Klemmteiles 24 gesteckt. Durch Anziehen der Klemmschraube 36 gelangt der Klemmkeil 33 mit seiner Konusfläche 35 in Anlage mit den beiden unteren Enden 22 sowie 23 und verklemmt diese in dem Klemmteil 24. Das zweite Stützschenkelpaar wird entsprechend vormontiert.

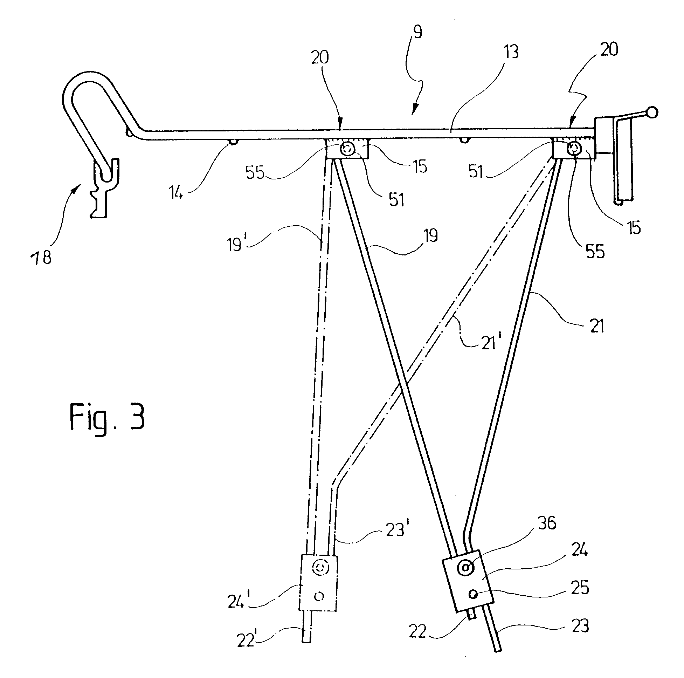

Der insoweit beschriebene vormontierte Gepäckträger 9 ist in Fig. 3 in einer Seitenansicht dargestellt, wobei für die Stützschenkel 19, 21 eine zweite gestrichelte Stellung 19', 21' angedeutet ist.

Wenn die Klemmschraube 36 des Klemmteiles 24 und die Klemmschrauben 48 der Gelenke 20 ein wenig gelockert sind, so daß die Stützschenkel 19, 21 in den Gelenken 20 schwenkbar und in dem Klemmteil 24 verschiebbar sind, läßt sich das Stützschenkelpaar zwischen der in Fig. 3 rechten Stellung 19, 21 und der in Fig. 3 linken Stellung 19', 21' verstellen. Dabei verschieben sich die unteren Enden 22 und 23 zueinander. Auch jede Zwischenstellung ist möglich.

Beim Verschwenken auftretende geringfügige Abweichungen in der Parallelität zwischen den unteren freien Enden 22 und 23 werden einerseits dadurch ausgeglichen, daß die Haken 43 der Stützschenkel 19, 21 in Richtung der Längsstrebe 13 Spiel haben, wodurch der obere Abstand zwischen den Stützschenkeln 19 und 21 in einem gewissen Maße veränderbar und so die Parallelität der unteren Enden 22, 23 wieder herstellbar ist. Andererseits sind die unteren Enden 22 und 23 der Stützschenkel 19, 21 in den zugeordneten Aufnahmebohrungen 27 bzw. 28 begrenzt kippbar, wodurch kleine Abweichungen von der Parallelität zulässig sind, ohne daß die unteren Enden 22, 23 in den Aufnahmebohrungen 27, 28 ungewollt verklemmen. Auch in der ganz nach vorne bzw. ganz nach hinten geschwenkten Stellung des Stützschenkelpaares sind diese deshalb noch leicht in dem Klemmteil 24 verschiebbar.

Soll der vormontierte Gepäckträger 9 an dem Hinterbau 1 nach Fig.1 befestigt werden, so wird er zunächst mittels der Befestigungsvorrichtung 18 an der Strebe 8 befestigt, wobei die Befestigungsvorrichtung 18 noch nicht endgültig festgezogen wird. Jetzt werden die beiden Stützschenkelpaare in eine solche Stellung geschwenkt, daß die beiden Klemmteile 24 mit den Schrauben 25 an dem jeweiligen Ausfallende 6 angeschraubt werden können. Dies ist möglich, weil weder die Klemmschrauben 48 der Gelenke 20 noch die Klemmschrauben 36 der Klemmteile 24 fest angezogen sind.

Durch Verschieben der Stützschenkel 19, 21 in den Klemmteilen 24, was gleichzeitig ein Verschwenken in den Gelenken 20 bewirkt, kann die horizontale Ausrichtung der Gepäckauflagefläche justiert werden. Sobald die gewünschte Einstellung erreicht ist, werden die Klemmschrauben 36 und 48, die genauso wie die Schrauben 25 mit ihren Köpfen zur Seite von dem Fahrzeug wegweisen und daher gut zugänglich sind, fest angezogen. Mit dem dann zu erfolgenden endgültigen Anziehen der Schrauben 25 und der Befestigungsvorrichtung 18 ist der Gepäckträger 9 fertig montiert.

Der neue Gepäckträger 9 ist damit einfach an verschiedenen Zweiradfahrzeugen anzubringen, die sowohl hinsichtlich der Höhe als auch hinsichtlich der Längsrichtung unterschiedliche Abstände zwischen der Pletscher-Platte und den Befestigungsstellen für die Klemmteile 24 aufweisen können.

Da die Gelenke 20 aus dem gleichen Material bestehen wie die Stützschenkel 19, 21 und der Gepäckträgerrahmen 11 ist die Fertigung des neuen Gepäckträgers 9, der vollständig aus demselben Material besteht, besonders einfach und kostengünstig.

Auch bei losen Klemmschrauben 48 der Gelenke 20 besteht dennoch nicht die Gefahr, daß die Gepäckauflagefläche verrutscht. Der Gepäckträger 9 stützt sich nämlich formschlüssig über den Nutengrund 42 auf dem Haken 43 des jeweiligen Stützschenkels 19, 21 ab. Solange die Stützschenkel 19, 21 fest in den Klemmteilen 24 sitzen, führt selbst ein zusätzliches Lockern der Schrauben 25, die die Klemmstücke 24 mit dem Fahrzeugrahmen verbinden, und/oder der Befestigungsvorrichtung 18 nicht zu einem Verkippen des Gepäckträgers.

## Patentansprüche

1. Gepäckträger (9) für Zweiradfahrzeuge, mit einem eine Gepäckauflagefläche bildenden Rahmen (11), dessen Längsstreben (12,13) etwa parallel zu einer Längsachse des Zweiradfahrzeuges verlaufen, mit an jeder Seite des Rahmens (11) wenigsens zwei Stützschenkeln (19,12), die an ihrem oberen Ende (43) mittels eines Gelenks (20) an dem Rahmen (11) befestigt sind, sowie mit einem Klemmteil (24) an jeder Seite des Rahmens (11), das im Bereich eines Endes (6) einer Gabel (7) des Zweiradfahrzeugs zu befestigen ist, Aufnahmebohrungen (27,28) zur Aufnahme der unteren Enden (22,23) der jeweiligen Stützschenkel (19,21) aufweist und in dem die unteren freien Enden der Stützschenkel (19,21) der jeweiligen Seite höhenverstellbar festzuklemmen sind, dadurch gekennzeichnet, daß alle Stützschenkel (19,21) unabhängig voneinander schwekbar und die Gelenke (20) festklemmbar sind, daß das untere Ende (22,23) jedes Stüzschenkels (19,21) in der jeweiligen Aufnahmebohrung (27,28) begrenzt kippbar ist und daß der Innendurchmesser der Aufnahmebohrungen (27,28) um ca. 0,5 mm größer ist als der Außendurchmesser des unteren Endes (22,23) des zugeordneten Stützschenkels (19,12).

2. Gepäckträger (9) nach Anspruch 1, dadurch gekennzeichnet, daß an jeder Seite des Rahmens (11) wenigstens zwei Stützschenkel (19, 21) vorgesehen sind, die V-förmig konvergierend nach unten verlaufen.

3. Gepäckträger (9) nach Anspruch 2, dadurch gekennzeichnet, daß zumindest eines (23) der unteren freien Enden (22, 23) der beiden an einer Seite des Rahmens (11) befindlichen Stützschenkel (19, 21) derart abgebogen ist, daß die unteren Enden (22, 23) der beiden Stützschenkel (19, 21) im wesentlichen parallel zueinander verlaufen.

4. Gepäckträger (9) nach Anspruch 1, dadurch gekennzeichnet daß die Stützschenkel (19, 21) im Bereich der Gelenke (20) formschlüssig (42, 45) mit dem Rahmen (11) verbunden sind.

5. Gepäckträger (9) nach Anspruch 4, dadurch gekennzeichnet, daß die Gelenke (20) je eine nach unten in Richtung der Stützschenkel (19, 21) offene Nut (41) mit einem Nutengrund (42) aufweisen.

6. Gepäckträger (9) nach Anspruch 5, dadurch gekennzeichnet, daß die nach unten offene Nut (41) mit ihrer Längsrichtung parallel zu den Längsstreben (12, 13) verläuft.

7. Gepäckträger (9) nach Anspruch 5, dadurch gekennzeichnet, daß die nach unten offene Nut (41) parallelflankig ist.

8. Gepäckträger (9) nach Anspruch 5, dadurch gekennzeichnet, daß der Nutengrund (42) im Querschnitt die Form eines Halbkreisbogens hat.

9. Gepäckträger (9) nach Anspruch 1, dadurch gekennzeichnet, daß die Stützschenkel (19, 21) über ihre ganze Länge konstant Kreisquerschnitt aufweisen.

10. Gepäckträger (9) nach Anspruch 5, dadurch gekennzeichnet, daß sich die Stützschenkel (19, 21) mit ihrem oberen Ende (43) in der nach unten offenen Nut (41) befinden.

11. Gepäckträger (9) nach Anspruch 10, dadurch gekennzeichnet, daß das obere Ende (43) eines jeden Stützschenkels (19, 21) umgebogen ist.

12. Gepäckträger (9) nach Anspruch 11, dadurch gekennzeichnet, daß das obere Ende (43) nach Art eines Hakens (43) um etwa 180° umgebogen ist.

13. Gepäckträger (9) nach den Ansprüchen 8 und 9, dadurch gekennzeichnet, daß der Radius des Halbkreisbogens des Nutengrundes (42) geringfügig größer ist als der Radius des oberen Endes (43) des Stützschenkels (19, 21).

14. Gepäckträger (9) nach Anspruch 12, dadurch gekennzeichnet, daß die Abmaße der Nut (41) in Längsrichtung geringfügig größer sind als die Abmaße des Hakens (43) in dieser Richtung.

15. Gepäckträger (9) nach Anspruch 10, dadurch gekennzeichnet, daß in der Nut (41) eine Klemmeinrichtung (48, 51, 57) zum Festklemmen des jeweiligen oberen Endes (43) des Stützschenkels (19, 21) sitzt.

16. Gepäckträger (9) nach Anspruch 15, dadurch gekennzeichnet, daß die Klemmeinrichtung (48, 51, 57) eine Anlagefläche (57) aufweist, über die sie im angezogenen Zustand das obere Ende (43) des jeweiligen Stützschenkels (19, 21) gegen den Nutengrund (42) verspannt.

17. Gepäckträger (9) nach den Ansprüchen 12 und 16, dadurch gekennzeichnet, daß die Klemmeinrichtung (48, 51, 57) sich mit einer zylindrischen Fläche (53) in einer Bohrung (47) in der Seitenwand (46) der Nut (41) abstützt, und daß die Fläche (53) in die konisch ausgebildete Anlagefläche übergeht.

18. Gepäckträger (9) nach Anspruch 17, dadurch gekennzeichnet, daß die Anlagefläche (57) von einer Außenfläche (57) einer Hülse (51) gebildet ist.

19. Gepäckträger (9) nach Anspruch 18, dadurch gekennzeichnet, daß die Hülse (51) auf einer Klemmschraube (48) sitzt.

20. Gepäckträger (9) nach Anspruch 17, dadurch gekennzeichnet, daß die Fläche (53) sowie die Anlagefläche (57) an einem Kopf einer Klemmschraube (48) ausgebildet sind.

21. Gepäckträger (9) nach Anspruch 19 oder 20, dadurch gekennzeichnet, daß die Klemmschraube (48) quer zu der Längsrichtung der Nut (41) angeordnet ist und in einer Seitenwand (46) der Nut (41) sitzt.

22. Gepäckträger (9) nach Anspruch 19, dadurch gekennzeichnet, daß die Hülse (51) eine Aufnahmeöffnung (54) für den Kopf (55) der Klemmschraube (48) aufweist.

23. Gepäckträger (9) nach einem der Ansprüche 9 bis 22, dadurch gekennzeichnet, daß den Aufnahmebohrungen (27, 28) in dem Klemmteil (24) eine Klemmvorrichtung (33, 36) zum Festhalten der unteren Enden (22, 23) der Stützschenkel (19, 21) zugeordnet ist.

24. Gepäckträger (9) nach einem der vorhergehenden Ansprüchen, dadurch gekennzeichnet, daß er wenigstens eine sich quer zwischen den Längsstreben (12, 13) erstreckende Querstrebe (15) aufweist.

25. Gepäckträger (9) nach Anspruch 24, dadurch gekennzeichnet, daß die Querstrebe (15) wenigstens ein Gelenk (20) enthält.

26. Gepäckträger (9) nach Anspruch 24, dadurch gekennzeichnet, daß die Querstrebe (15) durch Ablängen aus einem Strangpreßprofil gefertigt ist.

27. Gepäckträger (9) nach Anspruch 24, dadurch gekennzeichnet, daß die Querstrebe (15) zu beiden Seiten des Zweiradfahrzeuges wenigstens ein Gelenk (20) enthält.

## Claims

1. A luggage rack (9) for two-wheelers including a frame (11) forming a luggage support surface with longitudinal struts (12, 13) running nearly parallel to the longitudinal axis of the two-wheeler; at least two supporting struts (19, 21) on either side of the frame (11) being fixed to the frame (11) at their upper end (43) by means of a joint (20); and a clamping part (24) on each side of the frame (11) which clamping part (24) is designed to be mounted on a fork (7) of the two-wheeler near the end thereof, comprises reception holes (27,28) of the lower free ends (22,23) of the of the respective supporting struts (19,21) and is adapted to vertically adjustably clamp the lower free ends (22,23) of the supppoting struts (19,12) of the respective side, characterized in that all supporting struts (19,21) being separately moveable and the joints (20) being clampable, the lower end (22,23) being tiltable in the reception holes (27,28) to a certain extend and the inside diameter of the reception holes (27,28) exceeding the outside diameter of the lower end (22,23) of the allocated supporting strut (19,12) by approx. 0.5 mm.

2. A luggage rack (9) according to claim 1, characterised in that each side of the frame (11) includes at least two supporting struts (19, 21) converging downwards in V-formation.

3. A luggage rack (9) according to claim 2, characterised in that at least one (23) of the lower free ends (22, 23) of the supporting struts (19, 21) being both positioned on one side of the frame (11) is bent in such a way that the lower ends (22, 23) of both supporting struts (19, 21) are positioned nearly parallel to one another.

4. A luggage rack (9) according to claim 1, characterised in that the supporting struts (19, 21) are positively connected (42, 45) to frame (11) at the joints (20).

5. A luggage rack (9) according to claim 4, characterized in that the joints (20) include a groove (41) being downwardly open towards the supporting struts (19, 21) with a groove bed (42).

6. A luggage rack (9) according to claim 5, characterised in that the longitudinal direction of the downwardly open groove (41) runs parallel to the longitudinal struts (12, 13).

7. A luggage rack (9) according to claim 5, characterised in that the sides of the downwardly open groove (41) are parallel to one another.

8. A luggage rack (9) according to claim 5, characterised by the groove bed (42) having a semi-circular shape.

9. A luggage rack (9) according to claim 1, characterised in that the supporting struts (19, 21) being of constant circular section over their entire length.

10. A luggage rack (9) according to claim 5, characterised in that the upper end (43) of the supporting struts (19, 21) being positioned in the downwardly open groove (41).

11. A luggage rack (9) according to claim 10, characterised in that the upper end (43) of each supporting strut (19, 21) is bent over.

12. A luggage rack (9) according to claim 11, characterised in that the upper end (43) is bent by approx. 180° like a hook (43).

13. A luggage rack (9) according to claims 8 and 9, characterised in that the radius of the semi-circular arch of the groove bed (42) being slightly larger than the radius of the upper end (43) of the supporting strut (19, 21).

14. A luggage rack (9) according to claim 12, characterised in that the longitudinal dimensions of the groove (41) being slightly larger than the dimensions of the hook (43) in the same direction.

15. A luggage rack (9) according to claim 10, characterised in that a clamping device (48, 51, 57) for the clamping of the respective upper end (43) of the supporting strut (19, 21) is positioned in the groove (41).

16. A luggage rack (9) according to claim 15, characterised in that the clamping device (48, 51, 57) includes a locating face (57) for pressing the upper end (43) of the respective supporting strut (19, 21) into the groove bed (42) when tightened.

17. A luggage rack (9) according to claims 12 and 16, characterised in that the clamping device (48, 51, 57) supporting itself with a cylindrical surface (53) in a bore (47) in the side-wall (46) of the groove (41) and the surface (53) ending in a conically formed locating face.

18. A luggage rack (9) according to claim 17, characterised in that the locating face (57) is formed by an outer surface (57) of an adaptor.

19. A luggage rack (9) according to claim 18, characterised by the adaptor (51) being positioned on a clamping screw (48).

20. A luggage rack (9) according to claim 17, characterised in that the surface (53) and the locating face (57) are formed on a head of a clamping screw (48).

21. A luggage rack (9) according to claims 19 or 20, characterised in that the clamping screw (48) is positioned transversely with respect to the longitudinal direction of the groove (41) and is positioned in a side wall (46) of the groove (41).

22. A luggage rack (9) according to claim 19, characterised in that the adaptor (51) includes a receiving opening (54) for the head (55) of the clamping screw (48).

23. A luggage rack (9) according to claims 9 to 22, characterised in that a clamping device (33, 36) for holding the lower ends (22, 23) of the supporting struts (19, 21) being assigned to the receiving bores (27, 28) in the clamping part (24).

24. A luggage rack (9) according to one of the previous claims, characterised in that it includes at least one cross-strut (15) transversely connecting the longitudinal struts (12, 13).

25. A luggage rack (9) according to claim 24, characterised in that the cross-strut (15) includes at least one joint (20).

26. A luggage rack (9) according to claim 24, characterised in that the cross-strut (15) being produced from extrusion profile sections.

27. A luggage rack (9) according to claim 24, characterised in that the cross-strut (15) contains at least one joint (20) on either side of the two-wheeler.

## Revendications

1. Porte-bagages (9) pour véhicules à deux roues, avec un cadre (11) qui forme une surface de pose pour les bagages et dont les bras longitudinaux (12, 13) sont sensiblement parallèles à un axe longitudinal du véhicule à deux roues, avec, de chaque côté du cadre (11), au moins deux jambes d'appui (19, 21) qui, à leur extrémité (43) supérieure, sont fixées sur le cadre (11) au moyen d'une articulation (20) et avec, de chaque côté du cadre (11), un élément de fixation (24) qui est destiné à être fixé dans la région d'une extrémité (6) d'une fourche (7) du véhicule à deux roues, comporte des trous (27, 28) prévus pour recevoir les extrémités (22, 23) inférieures des jambes d'appui (19, 21) concernées et dans lequel les extrémités inférieures libres des jambes d'appui (19, 21) du côté concerné peuvent être serrées avec possibilité de réglage en hauteur, caractérisé par le fait que toutes les jambes d'appui (19, 21) peuvent pivoter indépendamment l'une de l'autre et que les articulations (20) peuvent être bloquées, par le fait que l'extrémité (22, 23) inférieure de chaque jambe d'appui (19, 21) peut pivoter de manière limitée dans le trou de réception (27, 28) concerné et par le fait que le diamètre intérieur du trou de réception (27, 28) est supérieur d'environ 0,5 mm au diamètre extérieur de l'extrémité (22, 23) inférieure de la jambe d'appui (19, 21) associée.

2. Porte-bagages (9) selon la revendication 1, caractérisé par le fait qu'il est prévu, de chaque côté du cadre (11), au moins deux jambes d'appui (19, 21) qui s'étendent vers le bas en convergeant en V.

3. Porte-bagages (9) selon la revendication 2, caractérisé par le fait qu'au moins une (23) des extrémités (22, 23) inférieures libres des deux jambes d'appui (19, 21) situées d'un même côté du cadre (11) est coudée de manière telle que lesdites extrémités (22, 23) inférieures desdites deux jambes d'appui (19, 21) soient sensiblement parallèle l'une à l'autre.

4. Porte-bagages (9) selon la revendication 1, caractérisé par le fait que, dans la région des articulations (20), les jambes d'appui (19, 21) sont liées au cadre (11) par complémentarité de forme (42, 45).

5. Porte-bagages (9) selon la revendication 4, caractérisé par le fait que les articulations (20) présentent chacune une rainure (41) avec un fond (42), qui est ouverte vers la bas en direction des jambes d'appui (19, 21).

6. Porte-bagages (9) selon la revendication 5, caractérisé par le fait que la direction longitudinal de la rainure (41) ouverte vers la bas est parallèle aux bras longitudinaux (12, 13) du cadre.

7. Porte-bagages (9) selon la revendication 5, caractérisé par le fait que les flancs de la rainure (41) ouverte vers la bas sont parallèles.

8. Porte-bagages (9) selon la revendication 5, caractérisé par le fait qu'en section transversale, le fond (42) de la rainure a la forme d'un arc semi-circulaire.

9. Porte-bagages (9) selon la revendication 1, caractérisé par le fait que les jambes d'appui (19, 21) ont une section circulaire constante sur l'ensemble de leur longueur.

10. Porte-bagages (9) selon la revendication 5, caractérisé par le fait que les jambes d'appui (19, 21) pénètrent par leur extrémité (43) supérieure dans la rainure (41) ouverte vers la bas.

11. Porte-bagages (9) selon la revendication 10, caractérisé par le fait que l'extrémité (43) supérieure de chacune des jambes d'appui (19, 21) est recourbée.

12. Porte-bagages (9) selon la revendication 11, caractérisé par le fait que l'extrémité (43) supérieure est recourbée d'environ 180° à la manière d'un crochet (43).

13. Porte-bagages (9) selon les revendications 8 et 9, caractérisé par le fait que le rayon de l'arc semi-circulaire du fond (42) de la rainure est légèrement supérieur au rayon de l'extrémité (43) supérieure de la jambe d'appui (19, 21).

14. Porte-bagages (9) selon la revendication 12, caractérisé par le fait que les dimensions de la rainure (41), dans la direction longitudinale, sont légèrement supérieures aux dimensions du crochet (43) dans cette direction.

15. Porte-bagages (9) selon la revendication 10, caractérisé par le fait qu'un dispositif de serrage (48, 51, 57) permettant de bloquer l'extrémité (43) supérieure concernée de la jambe d'appui (19, 21) est disposé dans la rainure (41).

16. Porte-bagages (9) selon la revendication 15, caractérisé par le fait que le dispositif de serrage (48, 51, 57) présente une surface d'appui (57) par l'intermédiaire de laquelle, à l'état serré, il presse l'extrémité (43) supérieure de la jambe d'appui (19, 21) concernée contre le fond (42) de la rainure.

17. Porte-bagages (9) selon les revendications 12 et 16, caractérisé par le fait que le dispositif de serrage (48, 51, 57) prend appui par l'intermédiaire d'une surface (53) cylindrique dans un perçage (47) dans la paroi latérale (46) de la rainure (41) et par le fait que la surface (53) se raccorde à la surface d'appui conique.

18. Porte-bagages (9) selon la revendication 17, caractérisé par le fait que la surface d'appui (57) est constituée par une surface (57) extérieure d'une douille (51).

19. Porte-bagages (9) selon la revendication 18, caractérisé par le fait que la douille (51) est montée sur une vis (48) de serrage.

20. Porte-bagages (9) selon la revendication 17, caractérisé par le fait que la surface (53) et la surface d'appui (57) sont aménagées sur la tête d'une vis de serrage (48).

21. Porte-bagages (9) selon la revendication 19 ou la revendication 20, caractérisé par le fait que la vis de serrage (48) est disposée transversalement à la direction longitudinale de la rainure (41) et est montée dans une paroi latérale (46) de la rainure (41).

22. Porte-bagages (9) selon la revendication 19, caractérisé par le fait que la douille (51) présente un logement (54) de réception pour la tête (55) de la vis de serrage (48).

23. Porte-bagages (9) selon l'une des revendications 9 à 22, caractérisé par le fait que dans l'élément de fixation (24) un dispositif de serrage (33, 36) est associé aux trous de réception (27, 28) aux fins de tenir les extrémités (22, 23) inférieures des jambes d'appui (19, 21).

24. Porte-bagages (9) selon l'une des revendications précédentes, caractérisé par le fait qu'il comporte au moins une traverse (15) qui s'étend transversalement entre les bras longitudinaux (12, 13).

25. Porte-bagages (9) selon la revendication 24, caractérisé par le fait que la traverse (15) comprend au moins une articulation (20).

26. Porte-bagages (9) selon la revendication 24, caractérisé par le fait que la traverse (15) est fabriquée par découpage dans un profilé extrudé.

27. Porte-bagages (9) selon la revendication 24, caractérisé par le fait que les traverses (15) comprennent au moins une articulation (20) de chaque côté du véhicule à deux roues.
